# EUROPEAN PATENT SPECIFICATION

(11) **EP 4 426 149 B1**
(45) Date of publication and mention of the grant of the patent: **23.07.2025**
(21) Application number: 22813530.7
(22) Date of filing: 04.11.2022
(51) Int. Cl.: A24F 40/40, A24F 40/60, H01H 13/02, H01H 13/06, A24F 40/50, A24F 40/70

(54) **AEROSOL-GENERATING DEVICE WITH BUTTON ARRANGEMENT HAVING A MEMBRANE**
AEROSOLERZEUGUNGSVORRICHTUNG MIT EINER KNOPFANORDNUNG MIT EINER MEMBRAN
DISPOSITIF DE GÉNÉRATION D'AÉROSOL AVEC AGENCEMENT DE BOUTON DISPOSANT D'UNE MEMBRANE

(30) Priority: 04.11.2021 EP 21206391; 04.11.2021 EP 21206393
(43) Date of publication of application: 11.09.2024
(73) Proprietor: Philip Morris Products S.A., 2000 Neuchâtel (CH)
(72) Inventor: TAN, Kwang Beng, Redhill Singapore 159471 (SG); IVARSSON, Bengt Ivar Anders, Labuan, 87000 (MY)
(74) Representative: Grünecker Patent- und Rechtsanwälte PartG mbB
(86) International application number: PCT/EP2022/080857
(87) International publication number: WO 2023/079099

(56) References cited:
- EP-A1- 3 513 671
- EP-A1- 3 554 418
- WO-A1-2020/182744
- US-A1- 2014 220 398
- US-A1- 2017 127 724
- US-A1- 2021 212 365
- DATABASE WPI Week 2021006, Derwent World Patents Index; AN 2021-83624N, XP002806163

## Description

The present disclosure relates to an aerosol-generating device comprising a button.

Buttons in aerosol-generating devices typically present possible routes for liquid ingress into the device, which can cause damage to internal components (e.g. water damage to the device's electronics). Thus, there exists a need to assist in preventing liquid ingress into an aerosol-generating device, particularly around a button on the device.

Arrangements for emitting light through an aperture in a button of an aerosol-generating device are subject to design limitations due to the requirement to maintain a capability of the button to be actuated. Thus, there exists a need for improved lighting of an aerosol-generating device, in particular a button of an aerosol-generating device.

CN213695706U discloses a battery device for an aerosol-generating device working with an atomizer. The battery device comprises a housing and a button provided in a through-hole of the housing. An elastic sealing member is clamped between an inner wall of the housing and a PCB support. The elastic sealing member covers the through-hole to seal the housing.

US2014220398 A1 discloses a battery assembly designed for use with electrically powered smoking devices. An upper housing assembly of the device comprises a membrane button.

US2021212365A1 discloses a battery assembly having a battery rod with a button provided in an opening of the battery rod. Below the button, a support is provided, wherein the button is disposed on the support.

WO2020182744A1 discloses an aerosol provision device having a control element with an outer member. The outer member is positioned above LEDs that are arranged around a user input device. The user input device may be a button or a switch which is operated when a force is applied by the user to the outer member. The outer member is adhered to a light-shaping member via an adhesive layer. Extending around the light-shaping member is a sealing member.

US2017127724A1 discloses an electronic cigarette having an electronic cigarette body provided with a functional element, which may include a button.

According to a first aspect of the present invention, there is provided an aerosol-generating device comprising a housing, a button and a membrane. The housing has an outer surface, an inner surface, and a through-hole connecting the outer surface and the inner surface. The button is at least partially arranged in, arranged in correspondence with, or arranged at the through-hole. The membrane is fixed to the housing and extends across the through-hole. A form-fit is provided between the housing and the button. The form-fit is configured to retain the button in the through-hole against the button falling out of the through-hole towards an outside of the aerosol-generating device.

The membrane may provide at least partial separation between an inside of the aerosol-generating device and an outside of the aerosol-generating device. The membrane may reduce the likelihood of foreign material, for example liquid or dust, entering an inside of the aerosol-generating device via the through-hole.

The membrane may be provided downstream (or underneath) of the button with respect to a pressing direction of the button.

The membrane may be waterproof. The membrane may reduce liquid transfer from outside the aerosol-generating device into the aerosol-generating device. The membrane may reduce the risk of damage to internal parts, in particular electronic parts, of the aerosol-generating device due to liquid entering the aerosol-generating device.

The membrane may be transparent or translucent. The membrane may allow light from inside the housing to pass through the membrane. Light from inside the housing may pass through the membrane to be visible from outside the housing. Light from inside the housing may pass through the membrane to the button.

A light source may be provided inside the housing. The light source may comprise one or more LED's. The light source may be provided downstream (or underneath) of the membrane with respect to a pressing direction of the button. The membrane may be provided between the light source and the button.

The membrane may be fixed to the inner surface of the housing. At the inner surface of the housing, the connection between the membrane and the housing may be protected from damage. Fixing the membrane to the inner surface of the housing may reduce interference of the membrane with operation of the button.

The membrane may be invisible or nearly invisible from outside the aerosol-generating device, thus avoiding impairing the appearance of the aerosol-generating device and reducing the likelihood of the membrane being damaged. The membrane may be visible from outside the aerosol-generating device only through a gap between the button and a wall portion of the housing that delimits the through-hole.

A recessed area may be provided at the inner surface of the housing. A wall thickness of the housing may be reduced in the recessed area as compared to parts of the housing surrounding the recessed area. The membrane may be fixed to the inner surface of the housing in the recessed area. The membrane may be fully received in the recessed area. The membrane may be protected within the recessed area. The recessed area may facilitate positioning the membrane upon assembly of the aerosol-generating device. A shape of the recessed area may correspond to a shape of the membrane. The recessed area may have a rectangular shape, or a circular shape, or a polygonal shape, for example.

The through-hole may be provided in the recessed area. The through-hole may be centrally provided in the recessed area.

The membrane may close the through-hole. The membrane may prevent foreign matter from entering an inside of the aerosol-generating device through the through-hole. The membrane may render the through-hole of the aerosol-generating device waterproof.

The membrane may be sealed to the housing fully around the through-hole. In particular, the membrane may be sealed to the inner surface of the housing fully around the through-hole. If the membrane is sealed to the housing fully around the through-hole, the likelihood of the connection between the membrane and the housing being torn may be reduced. A seal between the membrane and the housing may be waterproof. The membrane may be hermetically sealed to the housing, in particular to the inner surface of the housing.

The membrane may be sealed to the housing by at least one of: an adhesive, vibration welding, laser welding, a frame of the aerosol-generating device, and the membrane being two shot molded to the housing. Any one or more of the recited ways of sealing the membrane to the housing may be implemented. According to embodiments, the membrane may be sealed to the housing by adhesive only. According to other embodiments, the membrane may be sealed to the housing by an adhesive, and additionally a frame of the aerosol-generating device may press the membrane to the housing.

The membrane may be sealed to the housing by an adhesive comprising an adhesive layer between the membrane and the housing, in particular between the membrane and the inner surface of the housing. The adhesive layer may comprise double-sided adhesive tape or may be formed as double-sided adhesive tape. The adhesive layer may comprise glue or may be formed of glue. The adhesive layer may be waterproof. The adhesive layer may have a thickness between 0.1 millimeter and 1 millimeter, or between 0.1 millimeter and 0.5 millimeter, or between 0.1 millimeter and 0.3 millimeter.

The membrane may be an adhesive membrane. A connection between the adhesive membrane and the housing may be established by adhesive properties of the adhesive membrane.

A surface of the membrane that is overlapped by the button may be free of adhesive. An entirety of the surface of the membrane that is overlapped by the button may be free of adhesive.

The button and the membrane may be provided without a fixed connection between each other.

The membrane may have an outer surface facing towards an outside of the aerosol-generating device. The membrane may have an inner surface facing towards an inside of the aerosol-generating device. The button may face the outer surface of the membrane. The outer surface of the membrane and the inner surface of the membrane may be opposite surfaces of the membrane. The inner surface of the membrane may be downstream (or underneath) of the outer surface of the membrane with respect to a pressing direction of the button. The outer surface of the membrane may be fixed to the housing, in particular to the inner surface of the housing.

The membrane may comprise an elastic material. The membrane may be formed of an elastic material. The elastic material may be silicone rubber, for example.

The membrane may be configured to be elastically deformed when the button is pressed. By elastically deforming, the membrane may allow the button to act on one or more components within the device, in particular one or more switches, provided on the side of the membrane opposite to the button. By elastically deforming, the membrane may provide a seal between an inside of the aerosol-generating device and an outside of the aerosol-generating device irrespective of an operating position of the button.

The membrane may be configured to act on the button to support a return motion of the button from an activated position of the button into a resting position of the button. The return motion may be a motion in a direction antiparallel (or a direction opposite) to a pressing direction of the button. When the button is moved from the resting position to the activated position, for example by pressing the button from outside the aerosol-generating device along a pressing direction of the button, the membrane may be elastically deformed by the button. When the button is released, the potential energy stored by the membrane due to the elastic deformation of the membrane may support the return motion of the button to the resting position. According to embodiments, most or all of a force returning the button from the activated position to the resting position may be applied by the membrane, in particular by potential energy stored in the membrane due to elastic deformation of the membrane. There may be further forces acting on the button to support the return motion of the button from the activated position to the resting position. The other forces may be smaller or larger or roughly of the same magnitude as the force generated by the membrane.

The form-fit may include that certain motions of the button relative to the housing may be limited or prevented by physical engagement between the housing and the button.

The form-fit may be configured to retain the button in the through-hole along at least one direction. The form-fit may be configured to limit a motion of the button against a pressing direction of the button. The form-fit may comprise or be a structure of the housing that prevents the button from falling out of the through-hole by physically engaging the button.

The form-fit may retain the button in the through-hole against the button falling out of the through-hole towards an outside of the aerosol-generating device in a direction antiparallel (or a direction opposite) to a pressing direction of the button. The form-fit may retain the button from falling out of the through-hole towards an inside of the aerosol-generating device, in particular along the pressing direction.

The form-fit may comprise one or more retaining protrusions of the housing. The one or more retaining protrusions of the housing may extend into the through-hole. The one or more retaining protrusions of the housing may extend into the through-hole along a direction at least substantially perpendicular to a pressing direction of the button. The one or more retaining protrusions of the housing may extend onto the through-hole from a wall of the housing, wherein the wall of the housing delimits the through-hole.

The one or more retaining protrusions of the housing may extend into the through-hole from different sides of the through-hole. The one or more retaining protrusions of the housing may comprise a circumferential protrusion extending into the through-hole fully around a circumference of the through-hole.

The form-fit may comprise one or more retaining protrusions of the button. The one or more retaining protrusions of the button may be configured to engage the one or more retaining protrusions of the housing. The one or more retaining protrusions of the button may comprise a circumferential protrusion protruding from the button around a full circumference of the button.

Engagement of the one or more retaining protrusions of the button with the one or more retaining protrusions of the housing may prevent the button from falling out of the through-hole, in particular from falling out of the through-hole in a direction opposite to the pressing direction of the button.

The one or more retaining protrusions of the button may be provided downstream of or below the one or more retaining protrusions of the housing with respect to a pressing direction of the button.

The membrane may support the button. The button may lie on the membrane. The button may be confined in a space between the membrane and the housing, in particular in a space between the membrane and one or more retaining protrusions of the housing. The membrane may prevent the button from falling out of the through-hole towards an inside of the aerosol-generating device, in particular along a pressing direction of the button.

The button may be detached with respect to the housing. The button may be detached with respect to the membrane. The button may be detached with respect to the housing and the membrane. The button and the membrane may be provided without a fixed connection between each other. The button and the housing may be provided without a fixed connection between each other. There may be no fixed connection between the button and one or both of the housing and the membrane. The button may be configured to move with respect to one or both of the housing and the membrane.

The membrane may be formed as a sheet. The membrane may be formed as a flat sheet. A surface of the button may be pressed against a flat surface of the membrane, when the button is pressed.

The aerosol-generating device may further comprise a switch. Pressing the button may operate the switch. The button and the switch may be provided on opposing sides of the membrane. The membrane may separate the button from the switch. The button may be configured to act on the switch indirectly via at least the membrane. The switch may be connected to or be part of an electronic circuitry of the aerosol-generating device. The switch may be provided on or be connected to a printed circuit board of the aerosol-generating device. The membrane may be configured to prevent foreign matter entering the through-hole in the housing from reaching the electronic circuitry or the printed circuit board.

According to a second aspect of the present invention, there is provided a method for actuating a switch of an aerosol-generating device. A button is moved from a resting position towards an inside of the aerosol-generating device into an activated position, in particular along a pressing direction of the button. The button is at least partially provided within a through-hole of a housing of the aerosol-generating device. A membrane of the aerosol-generating device is deformed by the movement of the button. A switch is actuated by the movement of the button. The switch is provided on the opposite side of the membrane than the button. The button is retained in the through-hole against the button falling out of the through-hole towards an outside of the aerosol-generating device by a form-fit provided between the housing and the button.

Since the switch is provided on the opposite side of the membrane than the button, the membrane may protect the switch and surrounding electronic circuitry from foreign matter entering the aerosol-generating device at the location of the button. Since the membrane is deformed by the movement of the button, the membrane may be provided in the path of movement of the button between the button and the switch without impairing the ability to actuate the switch by moving the button.

The step of deforming the membrane may comprise elastically deforming the membrane.

The membrane may be configured to act on the button to support a return motion of the button from the activated position into the resting position, in particular due to potential energy stored in the membrane due to elastic deformation of the membrane.

The membrane may be formed as a flat sheet. During the step of moving the button from the resting position towards an inside of the aerosol-generating device into the activated position, a surface of the button may be pressed against a flat surface of the membrane. The step of deforming the membrane may comprise deforming the flat surface of the membrane.

The membrane may be transparent or translucent. Light generated on a first side of the membrane may pass through the membrane to be visible on a second, opposing side of the membrane. Light may be generated inside the aerosol-generating device on a first side of the membrane opposite to the button, and pass through the membrane towards the button.

The button may be detached with respect to the membrane. The button may move laterally on the membrane. The membrane may not hold the button against a movement of the button towards an outside of the aerosol-generating device.

The membrane may seal the through-hole.

The membrane may be fixed to the housing, in particular to an inner surface of the housing. The membrane may be fixed to the housing by any one or more of: an adhesive, or vibration welding, or laser welding, or a frame of the aerosol-generating device, or the membrane being two-shot molded to the housing.

The step of moving the button may comprise moving the button in a direction perpendicular to a main extension plane of the membrane.

The aerosol-generating device used in the method may be the aerosol-generating device according any one of the aspects described herein, in particular the aerosol-generating device according to any one of the first, fourth, seventh, or tenth aspects.

According to a third aspect of the present invention, there is provided a use of a membrane for sealing a through-hole of a housing of an aerosol-generating device, wherein a button of the aerosol-generating device is movable in the through-hole. A form-fit is provided between the housing and the button. The form-fit retains the button in the through-hole against the button falling out of the through-hole towards an outside of the aerosol-generating device.The membrane may be further used to support the button in its position in the through-hole.

The button may be configured to move with respect to the membrane. The button may be detached with respect to the membrane.

The aerosol-generating device in which the membrane is used may be the aerosol-generating device according to any one of the aspects described herein, in particular the aerosol-generating device according to any one of the first, fourth, seventh, or tenth aspects. The use of the membrane may comprise steps of the method according to any one of the aspects described herein, in particular steps of the method according to any one of the second, fifth, eighth, or eleventh aspects.

According to a fourth aspect, there is provided an aerosol-generating device comprising a button and at least one light source. The button has an outer side facing towards an outside of the aerosol-generating device. The button has an inner side facing towards an inside of the aerosol-generating device. The button is configured to be pressed in a pressing direction. The at least one light source is provided within the aerosol-generating device. The button comprises a button main body and a button light guide embedded in the button main body. The button light guide comprises at least one light entry surface on the inner side of the button. The button light guide comprises a light emission surface on the outer side of the button. The at least one light entry surface may be configured to receive light from the at least one light source. The light emission surface may be configured to emit the light from the at least one light source. The button light guide may be adapted to guide light from the at least one light entry surface on the inner side of the button to the light emission surface on the outer side of the button.

Since the button light guide is embedded in the button main body, light may be emitted through the button. Providing the button light guide embedded in the button main body may be preferred as compared to providing a light guide that is separate from the button. Providing a light guide that is separate from the button would potentially lead to the requirement of providing an additional opening in a housing of the aerosol-generating device through which the light guide is visible. Such additional opening in the housing would potentially provide an entry point through which foreign matter, in particular liquid, may enter the aerosol-generating device.

The at least one light source may comprise at least one light emitting diode (LED), or one or more LEDs. The at least one light source may be at least one light emitting diode (LED), or one or more LEDs.

The light emission surface may be flush with a surface of the button main body at the outer side of the button. The light emission surface may be recessed with respect a surface of the button main body surrounding the light emission surface. The light emission surface may protrude from a surface of the button main body surrounding the light emission surface.

The light emission surface may form a part of a surface of the button on the outer side of the button. The surface of the button on the outer side of the button may be accessible to be touched by a user in order to press the button in the pressing direction. The light emission surface may be accessible from outside to be touched by a user pressing the button.

The button light guide and the button main body may be integrally formed. If the button light guide and the button main body are integrally formed, entry of foreign matter between the button main body and the button light guide may be prevented. For example, the button main body may be formed around the button light guide in a molding step, such as an injection molding step. For example, the button light guide may be formed within the light guide body in a molding step, such as an injection molding step.

The at least one light entry surface and the light emission surface may be arranged on the button as desired, thus facilitating obtaining desired lighting patterns on the outer side of the button and allowing for an increased freedom of positioning the at least one light source within the device.

The at least one light entry surface may be offset from the light emission surface in a direction perpendicular to the pressing direction.

The at least one light source may be offset from the light emission surface in a direction perpendicular to the pressing direction. Thus, it is not required that the at least one light source is provided directly downstream of (or underneath) the light emission surface with respect to the pressing direction.

The at least one light source may comprise a plurality of light sources. The at least one light entry surface may comprise a plurality of light entry surfaces. Each of the plurality of light entry surfaces may be configured to receive light from a corresponding one of the plurality of light sources. Providing a plurality of light sources and a corresponding plurality of light entry surfaces may allow implementing different lighting schemes of the light emission surface by controlling the light sources accordingly. The plurality of light sources may be configured to emit light of the same wavelength or the same wavelength range or may be configured to emit light of different wavelengths or different wavelength ranges. One or more light source of the plurality of light sources may be configured to emit light of a different color than another one or more light source of the plurality of light sources.

The button light guide may comprise a plurality of light transfer portions. Each of the plurality of light transfer portions may connect a corresponding one of the plurality of light entry surfaces with the light emission surface. Each of the plurality of light sources may emit light to be emitted through the light emission surface. Different light transfer portions may connect to different sections of the light emission surface. Thus, light from different light sources may be emitted through different sections of the light emission surface.

At least one of the light transfer portions may be inclined with respect to the pressing direction. One or more inclined light transfer portions may facilitate free positioning of the light entry surfaces and the light emission surface on the button.

A spatial light intensity distribution over the light emission surface may be different depending on which one or more of the plurality of light sources is activated. Different spatial light intensity distributions may indicate different operating states of the aerosol-generating device. Different spatial light intensity distributions may indicate different information to a user.

The aerosol-generating device may further comprise a controller. The controller may be configured to selectively activate one or more light sources of the at least one light source. The controller may be configured to selectively activate one or more light sources of the at least one light source individually in groups. The controller may be configured to selectively activate one or more light sources of the at least one light source in dependence of an operating parameter of the aerosol-generating device. The operating parameter of the aerosol-generating device may be a charging state of a battery of the aerosol-generating device, or a state of a progression of a usage session of the aerosol-generating device. For example, a high number of activated light sources may indicate a high battery charge and a lower number of activated light sources may indicate a lower battery charge. In another example, a high number of activated light sources may indicate a low or high quantity of progress through a usage session and a lower number of activated light sources may indicate a high or low quantity of progress through a usage session, respectively. The controller may be configured to control the number of activated light sources such that the number of activated light sources is proportionate to a charging state of a battery of the aerosol-generating device.

The light emission surface may have an elongated shape, in particular a line shape. The light emission surface may be a single, cohesive surface. Sections of the light emission surface connected to different light transfer portions may be arranged one behind the other along a main extension direction of the light emission surface. By increasing the number of activated light sources, an illuminated length of the light emission surface may be increased.

The aerosol-generating device may further comprise a switch. Pressing the button in the pressing direction may operate the switch. The button may be configured to move to operate the switch. The at least one light entry surface may be positioned at the inner side of the button laterally offset with respect the switch.

The switch may be provided downstream of the light emission surface with respect to the pressing direction. The switch may be provided underneath the light emission surface with respect to the pressing direction. The switch may be provided centrally below the light emission surface with respect to the pressing direction. The switch may be provided downstream of the button with respect to the pressing direction. The switch may be provided below the button with respect to the pressing direction.

The switch may be provided laterally offset from a projection of the light emission surface along the pressing direction. The switch may be provided outside of a projection of the light emission surface along the pressing direction. A distance along a direction perpendicular to the pressing direction between the switch and a projection of the light emission surface along the pressing direction may be greater than a distance along a direction perpendicular to the pressing direction between the light source and a projection of the light emission surface along the pressing direction. The switch may be positioned radially outside the light source, with the pressing direction of the switch at a central position of the switch being considered the axial direction. The switch may be provided laterally offset from a projection of a center of the button along the pressing direction.

The aerosol-generating device may further comprise an actuation unit. Pressing the button in the pressing direction may operate the switch via the actuation unit. The actuation unit may be configured to move to actuate the button. The button may engage the actuation unit directly or indirectly to operate the actuation unit to actuate the switch. The actuation unit may be provided downstream of (or underneath) the button with respect to the pressing direction. The actuation unit may be provided between the switch and the button.

The actuation unit may be provided between the at least one light source and the button.

The actuation unit may have at least one light passage. The at least one light passage may be configured to let light from the at least one light source pass through the at least one light passage to the button. The at least one light passage may be formed as a through-hole in the actuation unit. The at least one light passage may be formed as a transparent or translucent section of the actuation unit.

The at least one light passage may comprise plural light passages. Each light passage may be configured to let light from a corresponding light source of the at least one light source pass through the actuation unit. A distinct light passage may be formed in the actuation unit for each light source.

The aerosol-generating device may further comprise a source light guide. The source light guide may be provided below the button with respect to the pressing direction. The source light guide may be provided downstream of the button with respect to the pressing direction. The source light guide may be configured to guide light from the at least one light source towards the at least one light entry surface of the button light guide. The source light guide may compensate for an offset between the position of the at least one light source and the position of the at least one light entry surface. The source light guide may increase the possible locations for installing the at least one light source within the aerosol-generating device. In particular, the at least one light source may be positioned so as not to interfere with a movement of the button in the pressing direction.

The button may be configured to move with respect to the source light guide. The button may be provided in detached manner with respect to the source light guide.

The source light guide may comprise a plurality of light channels. Each light channel may be configured to guide light from a corresponding one of the at least one light sources to a corresponding one of the at least one light entry surfaces.

The aerosol-generating device may comprise a switch assembly with a switch and an actuation unit. Pressing the button in the pressing direction may operate the switch via the actuation unit through an opening of the source light guide. Due to the opening of the source light guide and due to the actuation unit, the button may operate the switch even though the source light guide is provided underneath the button.

The opening of the source light guide may be provided at a position that lies underneath a central position of the button with respect to the pressing direction.

The aerosol-generating device may comprise a membrane. The membrane may be provided between the button and the source light guide. The membrane may extend between the button and the actuation unit. The membrane may be provided between the button and the actuation unit. The membrane may seal a through-hole of a housing of the aerosol-generating device, wherein the button is at least partially provided in the through-hole. The membrane may be sealed to an inner surface of the housing to prevent foreign matter, in particular liquid, from entering an inside of the aerosol-generating device through the through-hole. The membrane may be elastically deformable.

At least two button light guides may be embedded in the button main body, such that at least two distinct light emission surfaces are arranged on the outer side of the button.

According to a fifth aspect, there is provided a method for operating an aerosol-generating device. Light is guided from at least one light source within the aerosol-generating device towards a button of the aerosol-generating device through a source light guide. The button is moved along a pressing direction from a resting position towards an inside of the aerosol-generating device into an activated position, thereby actuating a switch within the aerosol-generating device. The switch is actuated through an opening of the source light guide.

Actuating the switch through an opening of the source light guide may enable a compact and responsive arrangement of the switch. For example, the switch may be positioned centrally below the button for efficient actuation of the switch, while the source light guide may still facilitate guiding light to desired positions of the button.

The source light guide may be provided below the button with respect to the pressing direction. The source light guide may be provided underneath the button with respect to the pressing direction. The source light guide may be provided downstream of the button with respect to the pressing direction.

The switch may be provided at the opposing side of the source light guide from the button.

The step of moving the button may comprise moving the button with respect to at least one of the source light guide and the switch.

The switch may be actuated by the button via an actuation unit. The actuation unit may protrude through the opening of the source light guide. The actuation unit may protrude through the opening of the source light guide from a side of the switch. The actuation unit may be configured to be moved or to be deformed by the button to actuate the switch. The actuation unit may be provided between the button and the switch. The actuation unit may at least partially or fully cover the switch, when seen from the direction of the button.

The step of moving the button may comprise deforming a membrane provided between the button and the light source. The membrane may be elastically deformed. The membrane may seal a through-hole of a housing of the aerosol-generating device. The button may be provided in the through-hole.

The aerosol-generating device operated according to the method may be the aerosol-generating device according to any one of the aspects described herein, in particular the aerosol-generating device according to any one of the first, fourth, seventh, or tenth aspects.

According to a sixth aspect, there is provided a use of a light guide for guiding light from a light source to a button, while actuating a switch via an opening in the light guide.

The light guide may be a source light guide.

The light guide, the button, and the light source may be part of an aerosol-generating device. The aerosol-generating device may be the aerosol-generating device according to any one of the aspects described herein, in particular the aerosol-generating device according to any one of the first, fourth, seventh, or tenth aspects.

The use of the light guide may comprise steps of the method according to any one of the aspects described herein, in particular steps of the method according to any one of the second, fifth, eighth, or eleventh aspects.

According to a seventh aspect, there is provided an aerosol-generating device. The aerosol-generating device comprises a housing and a button. The housing has an outer surface, an inner surface and a through-hole connecting the outer surface and the inner surface. The button is at least partially arranged in the through-hole. The button is configured to be pressed in a pressing direction. Centering parts are provided at one of a lateral surface of the button and a wall portion of the housing delimiting the through-hole. The centering parts are configured to center the button in the through-hole.

The centering parts may improve a tactile experience, when pressing the button. The centering parts may reduce a tendency of the button to move in a direction perpendicular to the pressing direction. The centering parts may center the button in the through-hole in a plane of motion perpendicular to the pressing direction. Due to being centered by the centering parts, an outward appearance of the button in the through-hole may be improved. The centering parts may reduce or prevent jamming of the button in the through-hole.

The wall portion of the housing delimiting the through-hole may connect the outer surface of the housing and the inner surface of the housing. The wall portion of the housing delimiting the through-hole, alone or in combination with one or more additional wall portions of the housing, may connect the outer surface of the housing and the inner surface of the housing. The wall portion of the housing delimiting the through-hole may delimit the through-hole in a direction perpendicular to the pressing direction. The wall portion of the housing delimiting the through-hole may extend in parallel to the pressing direction. The wall portion of the housing delimiting the through-hole may circumferentially extend around the through-hole. The wall portion of the housing delimiting the through-hole may extend fully around the through-hole. The wall portion of the housing delimiting the through-hole may be a wall portion delimiting the entirety of the through-hole, or a wall portion delimiting a part of the through-hole.

The lateral surface of the button may extend in parallel to the pressing direction. The lateral surface of the button may connect an outer side of the button facing towards an outside of the aerosol-generating device and an inner side of the button facing towards an inside of the aerosol-generating device. The lateral surface of the button may face the wall portion of the housing de-limiting the through-hole. The lateral surface of the button may be parallel to the wall portion of the housing delimiting the through-hole.

A gap may be provided between the wall portion of the housing delimiting the through-hole and the lateral surface of the button.

The button may be detached from the housing. The button may be configured to move in the through-hole. The button may be provided in the through-hole without a fixed connection be-tween the button and the housing. The housing and the button may be separate parts.

The centering parts may be formed as centering protrusions. The centering protrusions may be formed at one of the lateral surface of the button and the wall portion of the housing de-limiting the through-hole. The centering parts may be formed as centering protrusions of the housing. The centering parts may be formed as centering protrusions of the button.

The centering parts may be integral parts of the housing or integral parts of the button. The centering parts may be fixedly attached to the button or fixedly attached to the housing. The centering parts may be integrally formed with the housing or with the button via two-shot molding.

The centering parts may be detached from the other one of the lateral surface of the button and the wall portion of the housing delimiting the through-hole. The centering parts may be configured to move relative to the other one of the lateral surface of the button and the wall portion of the housing delimiting the through-hole.

The centering parts may extend towards the other one of the lateral surface of the button and the wall portion of the housing delimiting the through-hole. The centering parts may extend towards the other one of the lateral surface of the button and the wall portion of the housing generally in a direction perpendicular to the pressing direction.

The centering parts may be configured to engage the other one of the lateral surface of the button and the wall portion of the housing delimiting the through-hole. Engagement between the centering parts and the other one of the lateral surface of the button and the wall portion of the housing delimiting the through-hole may provide for a minimum distance between the lateral surface of the button and the wall portion of the housing delimiting the through-hole at the position of the centering parts.

The other one of the lateral surface of the button and the wall portion of the housing delimiting the through-hole may be shaped as a plane surface bent around an axis parallel to the pressing direction. The other one of the lateral surface of the button and the wall portion of the housing delimiting the through-hole may be devoid of any local shape features.

The other one of the lateral surface of the button and the wall portion of the housing delimiting the through-hole may comprise centering recesses. The centering parts may be configured to be at least partly received in the centering recesses. The centering parts may be configured to protrude into the centering recesses. Movement of the button within the through-hole may be limited by one or more centering parts being received in one or more corresponding centering recesses. A centering recess may be provided for each centering part. Each of the centering parts may form a pair with a corresponding centering recess. The centering part and the centering recess of a pair may face each other.

The centering parts may be configured to limit an area of contact between the lateral surface of the button and the wall portion of the housing delimiting the through-hole, or to prevent contact between the lateral surface of the button and the wall portion of the housing delimiting the through-hole.

The centering parts may be configured to stabilize a position of the button within the through-hole. The centering parts may limit a movement of the button in a direction perpendicular to the pressing direction.

The centering parts may be configured to limit rotation of the button within the through-hole. The centering parts may be configured to limit rotation of the button about an axis parallel to the pressing direction. The centering parts may be configured to at least substantially maintain an orientation of the button in the through-hole. The centering parts may comprise an elastomeric material. The centering parts may be formed of an elastomeric material. An elastomeric material of the centering parts may dampen a shock generated by a contact between the centering parts and the other one of the lateral surface of the button and the wall portion of the housing delimiting the through-hole. The elastomeric material may reduce a risk of the centering parts being damaged, in particular being damaged by mechanical engagement with other parts.

The other one of the lateral surface of the button and the wall portion of the housing delimiting the through-hole may comprise an elastomeric material or may, fully or in part, be formed of an elastomeric material. For example, the other one of the lateral surface of the button and the wall portion of the housing delimiting the through-hole may be coated with an elastomeric material.

The centering parts may comprise plural centering parts. The centering parts may comprise at least two centering parts, or at least four centering parts, or at least six centering parts, or at least seven centering parts, or at least eight centering parts, or at least ten centering parts, for example.

The plural centering parts may be distributed around a circumference of the through-hole or a circumference of the button. The centering parts may be symmetrically distributed around a circumference of the through-hole or a circumference of the button. The centering parts may be asymmetrically distributed around the circumference of the through-hole or the circumference of the button. Intervals between adjacent centering parts may be identical for all centering parts. Intervals between adjacent centering parts may be different for at least some centering parts. Gaps between the housing and the button may be provided between adjacent centering parts.

The centering parts may comprise one or more pairs of centering parts. Centering parts of a pair of centering parts may be positioned opposite to each other. Centering parts of a pair of centering parts may be positioned on opposite lateral sides of the button. Centering parts of a pair of centering parts may limit a movement of the button between each other.

The centering parts may in sum extend over no more than 50 percent, or no more than 30 percent, or no more than 20 percent, or no more than 10 percent, or no more than 5 percent of a circumference of the one of the lateral surface of the button and the wall portion of the housing delimiting the through-hole. In the remaining percentage of the circumference of the one of the lateral surface of the button and the wall portion of the housing delimiting the through-hole, gaps between adjacent centering parts may be provided. The centering parts may reduce a contact area between the housing and the button, which may reduce friction between the button and the housing.

The centering parts may in sum extend over at least 1 percent, or at least 3 percent, or at least 5 percent, or at least 10 percent, or at least 15 percent, or at least 20 percent of a circumference of the one of the lateral surface of the button and the wall portion of the housing delimiting the through-hole.

An individual centering part may extend over no more than 1 percent, or no more than 3 percent, or no more than 5 percent, or no more than 10 percent of a circumference of the one of the lateral surface of the button and the wall portion of the housing delimiting the through-hole. An individual centering part may extend over at least 0.1 percent, or at least 0.5 percent, or at least 1 percent, or at least 3 percent, or at least 5 percent, or at least 10 percent of a circumference of the one of the lateral surface of the button and the wall portion of the housing delimiting the through-hole.

The centering parts may extend from the one of the lateral surface of the button and the wall portion of the housing delimiting the through-hole by between 1 millimeter and 20 millimeters, or by between 1 millimeter and 15 millimeters, or by between 3 millimeters and 15 millimeters, or by between 5 millimeters and 15 millimeters, or by between 5 millimeters and 10 millimeters. The indicated ranges may describe an extension towards the other one of the lateral surface of the button and the wall portion of the housing delimiting the through-hole. The indicated ranges may refer to an extension in a direction perpendicular to the pressing direction.

A form-fit between the housing and the button may be provided. The form-fit may be con-figured to retain the button in the through-hole against the button falling out of the through-hole towards an outside of the aerosol-generating device.

The form-fit may comprise one or more retaining protrusions of the housing. The one or more retaining protrusions of the housing may extend into the through-hole. The one or more retaining protrusions of the housing may extend into the through-hole further than the centering parts. The centering parts may be provided downstream of (or underneath) the one or more retaining protrusions of the housing with respect to the pressing direction. The centering parts may be provided at the wall portion of the housing delimiting the through-hole downstream of (or below) the one or more retaining protrusions of the housing with respect to the pressing direction.

The one or more retaining protrusions of the housing may cover the centering parts so that the centering parts are not visible from outside the aerosol-generating device.

The one or more retaining protrusions of the housing may comprise a single retaining protrusion of the housing.

The one or more retaining protrusions of the housing may comprise a circumferential protrusion. The circumferential protrusion may extend into the through-hole fully around a circumference of the through-hole.

The form-fit may comprise one or more retraining protrusions of the button. The one or more retaining protrusions of the button may be configured to engage the one or more retaining protrusions of the housing.

The one or more retaining protrusions of the button may comprise a single retaining protrusion of the button. The single retaining protrusion of the button may extend around a full circumference of the button.

A surface of the one or more retaining protrusions of the button that faces against the pressing direction may be configured to engage a surface of the one or more retaining protrusions of the housing that faces along the pressing direction. Engaging surfaces of the at least one retaining protrusions of the button and of the least one retaining protrusions of the housing may be parallel to each other. Engaging surfaces of the at least one retaining protrusions of the button and engaging surfaces of the at least one retaining protrusions of the housing may extend perpendicular to the pressing direction. The lateral surface of the button may be part of the at least one retaining protrusions of the button.

The aerosol-generating device may further comprise a membrane. The membrane may be fixed to the housing. The membrane may extend across the through-hole. The membrane may be fixed to an inner surface of the housing. The membrane may seal the through-hole.

The membrane may be provided downstream of the button with respect to the pressing direction. The membrane may be provided downstream of the centering parts with respect to the pressing direction.

According to an eighth aspect, there is provided a method for operating a button of an aerosol-generating device. A button provided at least partially within a through-hole of a housing of an aerosol-generating device is pressed to move the button from a resting position towards an inside of the aerosol-generating device into an activated position. The button is centered in the through-hole with centering parts provided at one of a lateral surface of the button and a wall portion of the housing delimiting the through-hole.

In the activated position, the button may actuate a switch of the aerosol-generating device. In the resting position, the button may not activate the switch. The button may be moved from the resting position into the activated position by pressing the button in a pressing direction.

The centering parts may stabilize a position of the button within the through-hole.

The centering parts may be configured to limit rotation of the button within the through-hole.

A membrane of the aerosol-generating device may be deformed by the movement of the button, in particular by the movement of the button from the resting position into the activated position.

The aerosol-generating device used in the method may be the aerosol-generating device according any one of the aspects described herein, in particular the aerosol-generating device according to any one of the first, fourth, seventh, or tenth aspects.

According to a ninth aspect, there is provided a use of centering parts to center a button in a through-hole provided in a housing of an aerosol-generating device. The centering parts are provided at one of a lateral surface of the button and a wall portion of the housing delimiting the through-hole.

The centering parts may be used to limit a rotation of the button in the through-hole. The centering parts may be used to limit a rotation of the button about an axis that is parallel to the pressing direction of the button.

The aerosol-generating device in which the centering parts are used may be the aerosol-generating device according to any one of the aspects described herein, in particular the aerosol-generating device according to any one of the first, fourth, seventh, or tenth aspects.

The use may comprise steps of the methods according to any one of the aspects described herein, in particular steps of the methods according any one of the second, fifth, eighth, or eleventh aspects.

According to a tenth aspect, there is provided an aerosol-generating device comprising a housing, a button, a switch, and an actuation unit. The housing has an outer surface, an inner surface, and a through-hole connecting the outer surface and the inner surface. The button is at least partially arranged in the through-hole. The button is configured to be pressed in a pressing direction. Pressing the button in the pressing direction operates the switch via the actuation unit.

The actuation unit may act as an intermediary between the button and the switch. The actuation unit may transmit a force from the button to the switch. When the button is pressed, at least a part of the pressing force may be transmitted to the switch via the actuation unit. When the button is pressed, at least a part of the pressing force may be directed or redirected by the actuation unit towards the switch.

The actuation unit may be detached from the button. The actuation unit and the button may be separate parts. The actuation unit and the button may be configured for a relative motion between each other.

The actuation unit may be detached from the switch. The actuation unit and the switch may be separate parts. The actuation unit and the switch may be configured for a relative motion between each other.

The actuation unit may be provided between the switch and the button. The actuation unit may bridge at least a part of a distance between the button and the switch. The actuation unit may allow for the switch and the button to be arranged at a distance from each other.

The actuation unit may be formed as a plate or as a platform. A plate-shaped or platform-shaped actuation unit may be resistant to damage. A main extension plane of the actuation unit may be at least generally perpendicular to the pressing direction. A main extension plane of the actuation unit may be at least generally perpendicular to the pressing direction at least in a resting position of the switch.

The actuation unit may be configured to carry out a tilting motion when the button is pressed in the pressing direction. The button may be configured to cause a tilting motion of the actuation unit upon being pressed. When the button is pressed, the button may move in a direction towards the actuation unit. When being pressed, the button may directly or indirectly engage the actuation unit.

The tilting motion of the actuation unit may be a tilting motion about an axis that is perpendicular to the pressing direction. The tilting motion may comprise one side of the actuation unit moving more towards an inside of the aerosol-generating device than another portion of the actuation unit. The portion of the actuation unit that moves more towards an inside of the aerosol-generating device may actuate the switch.

The actuation unit may directly or indirectly engage the switch to operate the switch.

The aerosol-generating device may further comprise at least one guide pin. The at least one guide pin may extend into a corresponding at least one guide hole in the actuation unit. The at least one guide hole may extend through the actuation unit at least generally in parallel to the pressing direction of the button. The at least one guide pin may be fixedly provided within the aerosol-generating device. The at least one guide pin may be provided on a printed circuit board of the aerosol-generating device. The at least one guide pin may extend through a printed circuit board of the aerosol-generating device. Engagement between the at least one guide pin and the corresponding at least one guide hole may limit a lateral motion of the actuation unit in a direction perpendicular to the pressing direction. The actuation unit may be secured in its position by the at least one guide pin extending into the corresponding at least one guide hole. The at least one guide pin may be received in the corresponding at least one guide hole in a manner that allows the actuation unit to move to operate the switch, when the button is pressed. The at least one guide hole may fully or partially extend through the actuation unit. The at least one guide hole may extend through the actuation unit in a direction that is at least generally parallel to the pressing direction.

The at least one guide hole may comprise a circular cross-section. The at least one guide hole may comprise an elliptical cross-section.

The at least one guide pin may have an elliptical cross-section. The at least one guide pin may have a circular cross-section.

The at least one guide pin may have an elliptical cross-section and the corresponding at least one guide hole may have a circular cross-section or an elliptical cross-section. The at least one guide pin may have a circular cross-section and the corresponding at least one guide hole may have a circular cross-section or an elliptical cross-section.

The at least one guide pin may be laterally offset from a projection of a center of the button along the pressing direction. The at least one guide pin may be laterally offset from a center of the actuation unit.

When the button is pressed, a portion of the actuation unit that is distal with respect to a position of the at least one guide hole may move farther towards an inside of the aerosol-generating device than a region of the actuation unit adjacent to the at least one guide hole.

The at least one guide pin and the switch may be provided at opposing halves of the actuation unit.

The switch may be laterally offset from a projection of a center of the button along the pressing direction. The switch may be laterally offset from a projection of a center of the actuation unit along the pressing direction.

The aerosol-generating device may further comprise a damper. The damper may be con-figured to act against a motion of the actuation unit towards the switch. The damper may cause a resistance of the button that is felt by a user pressing the button. The damper may at least partly define a force that is required to be applied on the button to activate the switch.

The damper may be configured to provide at least part of a restoring force returning the button against the pressing direction, when the button is released.

The actuation unit may be provided between the damper and the button. The actuation unit may be in contact with the damper.

The damper may be provided on the same side of the actuation unit as the switch. The damper may be laterally offset from the switch.

The damper may be provided centrally below the actuation unit. The damper may be pro-vided centrally below the button. One or both of the actuation unit and the button may be centrally supported by the damper. The damper may be provided laterally offset from a projection of a center of the actuation unit along the pressing direction. The damper may be provided laterally offset from a projection of a center of the button along the pressing direction.

The damper may support one or both of the actuation unit and the button, when the button is pressed.

The damper may comprise an elastic material. The damper may be formed of an elastic material. The elastic material may be a foam material. The elastic material may comprise a rubber material. The elastic material may be a rubber material.

The damper may be compressed, when the button is pressed. Compression of the damper may facilitate a movement of the actuation unit towards the switch. After being compressed, the damper may re-extend, in particular due to its elasticity. Be re-extending, the damper may supporting a return motion of one or both of the actuation unit and the button.

The aerosol-generating device may further comprise a printed circuit board. The actuation unit may be provided between the printed circuit board and the button. The switch may be pro-vided on the printed circuit board. A main extension direction of the printed circuit board may be at least generally perpendicular to the pressing direction. The damper may be provided on the printed circuit board. The damper may be provided on the printed circuit board laterally offset with respect to the switch. The printed circuit board may support the damper. The damper may be fixed to the printed circuit board. The damper may be attached to the printed circuit board, in particular by an adhesive or by glue.

A membrane may be provided between the actuation unit and the button. The membrane may seal the through-hole. The button may be configured to engage the actuation unit indirectly via the membrane. Alternatively, the membrane may be omitted and the button may optionally directly contact the actuation unit.

The actuation unit may have at least one light channel. The at least one light channel may be configured to let light from at least one light source pass through the actuation unit to the button. The at least one light channel may fully extend through the actuation unit. The at least one light channel may be formed as a through-hole of the actuation unit. The at least one light channel may extend at least generally in parallel to the pressing direction. The at least one light channel may extend at least generally in parallel to the pressing direction, when the button is in a resting position.

The at least one light source may be provided downstream of the actuation unit with respect to the pressing direction. The actuation unit may be provided between the at least one light source and the button. The at least one light source may be provided on the printed circuit board. The at least one light source may be laterally offset from a projection of a center of the button along the pressing direction. The at least one light source may be provided centrally below the button.

The switch may be farther laterally offset from a projection of a center of the button along the pressing direction than the at least one light source. The at least one light source may be pro-vided between the switch and the damper.

The at least one light channel may comprise a plurality of light channels. The at least one light source may comprise a plurality of light sources. One or more light sources may be provided below a corresponding one of the light channels.

According to an eleventh aspect, there is provided a method for actuating a switch of an aerosol-generating device. An actuation unit is provided within the aerosol-generating device. By moving a button from a resting position towards an inside of the aerosol-generating device into an activated position, a tilting motion of the actuation unit is caused, there-by actuating a switch provided within the aerosol-generating device via the actuation unit.

Moving the button from the resting position into the activated position may comprise moving the button in a pressing direction.

The tilting motion may be a tilting motion about an axis that is at least generally perpendicular to the pressing direction.

A membrane of the aerosol-generating device may be deformed by the movement of the button. The membrane may seal a through-hole of a housing of the aerosol-generating device. The button may be provided at least partially within the through-hole.

The membrane may be positioned between the actuation unit and the button. The button may engage the actuation unit indirectly via the membrane. The membrane may separate the actuation unit from the button.

During the tilting motion of the actuation unit, the actuation unit may be guided by at least one guide pin extending into a corresponding at least one guide hole in the actuation unit. The actuation unit may be guided on the at least one guide pin with sufficient play to allow for the tilting motion.

A part of the actuation unit opposite the guide hole may contact the switch to actuate the switch.

The button may be returned to the resting position by a damper. The actuation unit may be provided between the damper and the button.

The aerosol-generating device may be the aerosol-generating device according any one of the aspects described herein, in particular the aerosol-generating device according to any one of the first, fourth, seventh, or tenth aspects.

According to a twelfth aspect, there is provided a use of an actuation unit provided below a button and carrying out a tilting motion to actuate a switch provided within an aerosol-generating device.

The aerosol-generating device in which the actuation unit is used may be the aerosol-generating device according to any one of the aspects described herein, in particular the aerosol-generating device according to any one of the first, fourth, seventh, or tenth aspects.

The use may comprise steps of the methods according to any one of the aspects described herein, in particular steps of the methods according any one of the second, fifth, eighth, or eleventh aspects.

The aerosol-generating device of any one of the aspects described herein may be a handheld electronic device for use with an aerosol-generating article. The aerosol-generating device may comprise an insertion opening for an aerosol-generating article, in particular a rod-shaped aerosol-generating article. The aerosol-generating article may be at least partially inserted into the insertion opening to allow for generation of aerosol for consumption by a user.

The aerosol-generating device may comprise a heating mechanism to heat aerosol-generating substances in the aerosol-generating article. The heating mechanism may be an electronic heating mechanism. The heating mechanism may be powered by a battery of the aerosol-generating device, in particular by a rechargeable battery of the aerosol-generating device. The aerosol-generating device may work according to the heat-not-burn principle. The aerosol-generating device may be configured to generate aerosol from e-liquid.

According to a thirteenth aspect, there is provided an aerosol-generating system. The aerosol-generating system comprises an aerosol-generating article and the aerosol-generating device according to any one of the aspects described herein, in particular the aerosol-generating device according to any one of the first, fourth, seventh, or tenth aspects. The aerosol-generating device may be configured to generate aerosol from the aerosol-generating article. The aerosol-generating device may be configured to heat the aerosol-generating article to release aerosol. The aerosol-generating article may be configured to be at least partially received in the aerosol-generating device. The aerosol-generating article may comprise aerosol-generating material configured to release aerosol upon being heated. The aerosol-generating material may comprise tobacco material.

Features described with respect to any one of the aspects described herein may be combined with, or transferred to any one of the other aspects. The statement that an item or a connection between items is "waterproof" as used herein may include that at least the requirements of IPX7 are fulfilled by the item or by the connection between items.

The expression "a plurality" as used herein may be interpreted as meaning "at least two" or "two or more."

A lateral direction as referred to herein means a direction that is perpendicular to the pressing direction of the button. If a first item is laterally offset from a second item, there is no overlap between the first item and the second item in a viewing direction that is parallel to the pressing direction of the button. It is, however, not necessary (although possible) that a displacement between the first item and the second item is exclusively in the direction perpendicular to the pressing direction. The displacement between the first item and the second item may also have a component parallel to the pressing direction.

The expression that one item is "detached" with respect to another item as used herein does not exclude that the two items may be in contact with each other. One item being detached with respect to another item, however, excludes the two items being fixedly connected to each other.

The statement that one item is "configured to move" with respect to another item as used herein does not exclude that the items move together or in unison. In particular, in normal operation, the two items may move together. However, an item "configured to move" with respect to another item has the capability to be moved with respect to the other item and may not be fixed to the other item. One item being moved with respect to another item does not require (but may nevertheless comprise) actual movement of the item, but also encompasses the situation that the item remains still and the other item is moved (relative movement between the items). For example, if the button is configured to move with respect to the membrane in any of the claims, examples or aspects described herein, the button and the membrane may still move in unison during operation of the device. The button is, however, capable of movement with respect to the membrane. However, this capability may be restricted by the fact that both the button and the membrane are restricted in their movements with respect to the device. This restriction indirectly also restricts the movement of the button and the membrane with respect to each other.

Examples will now be further described with reference to the figures in which:
Fig. 1 shows a schematic perspective view of an aerosol-generating device, which may be a device according to a first embodiment or a device according to a second embodiment;
Fig. 2 shows a schematic partial sectional view through the device according to the first embodiment with the section indicated at I-I in Fig. 1;
Fig. 3 shows a schematic view onto the device according to the first embodiment in the region of the button with the second housing part and the button removed in a viewing direction along the pressing direction of the button;
Fig. 4 shows the view of Fig. 3 with the membrane removed;
Fig. 5 shows the view of Fig. 4 with the source light guide removed;
Fig. 6 shows the view of Fig. 5 with the actuation unit removed;
Fig. 7A shows a schematic view of the outer side of the button of the device according to the first embodiment;
Fig. 7B shows a schematic view of the inner side of the button of the device according to the first embodiment;
Fig. 7C shows a schematic perspective view of the button light guide of the device according to the first embodiment;
Fig. 8A shows a schematic view of the source light guide from the side of the button of the device according to the first embodiment;
Fig. 8B shows a schematic view of the source light guide from a side of the switch of the device according to the first embodiment;
Fig. 8C shows a schematic perspective view of the light channels of the source light guide according to the first embodiment;
Fig. 9 shows a schematic partial sectional view through the device according to the second embodiment with the section indicated at I-I in Fig. 1;
Fig. 10 shows a schematic view onto the device according to the second embodiment in the region of the button with the second housing part and the button removed in a viewing direction along the pressing direction of the button;
Fig. 11 shows the view of Fig. 10 with the membrane removed;
Fig. 12 shows the view of Fig. 11 with the actuation unit removed;
Fig. 13A shows a schematic view of the outer side of the button of the device according to the second embodiment;
Fig. 13B shows a schematic view of the inner side of the button of the device according to the second embodiment;
Fig. 13C shows a schematic perspective view of the button light guide of the device according to the second embodiment;
Fig. 14 shows a schematic perspective view onto an inner surface of the second housing part according to a version of the first embodiment or the second embodiment with centering parts at the housing;
Fig. 15 shows a sectional view through the housing and the button according to a version of the first embodiment or the second embodiment with centering parts at the housing; and
Fig. 16 shows a sectional view through the housing and the button according to a version of the first embodiment or the second embodiment with centering parts at the button.

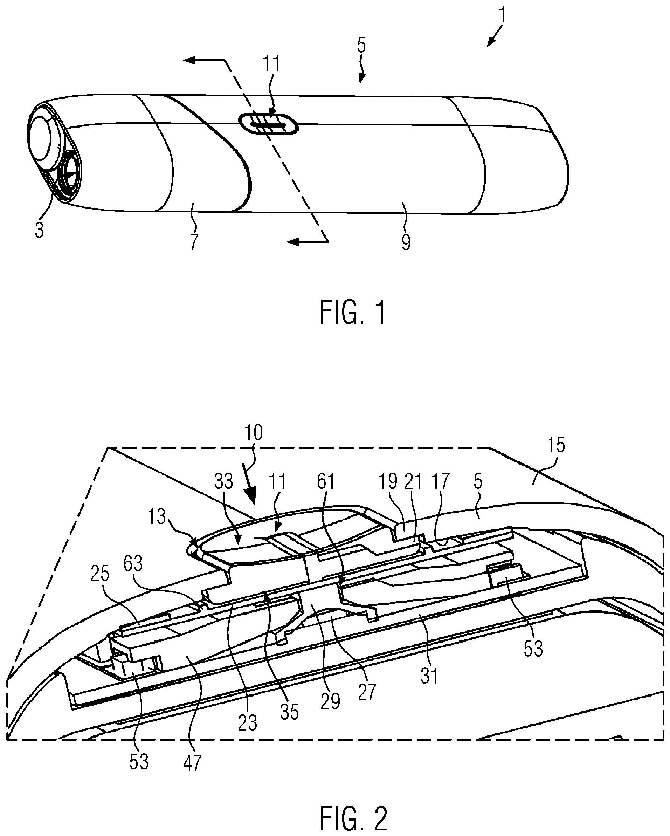

Fig. 1 shows an aerosol-generating device 1. The aerosol-generating device 1 is a handheld electronic device for use with an aerosol-generating article. The aerosol-generating device 1 comprises a housing 5 at least partially defining an outer appearance of the aerosol-generating device 1. In the illustrated embodiments, the housing 5 comprises a first housing part 7 and a second housing part 9 which are both generally cylindrically shaped and combine to form the housing 5.

The aerosol-generating device 1 comprises an insertion opening 3 for an aerosol-generating article. The aerosol-generating article may be at least partially inserted into the insertion opening 3 to allow for generation of aerosol for consumption by a user. Inside the housing 5, the aerosol-generating device 1 comprises an electronic heater mechanism for heating the aerosol-generating article. The electronic heater mechanism is powered by a battery provided inside the housing 5. Upon being heated, aerosol-generating substances of the aerosol-generating article form an aerosol for consumption by a user.

The aerosol-generating device 1 comprises a button 11. The button 11 is accessible from outside the aerosol-generating device 1. A user may press the button 11 to switch the aerosol-generating device 1 on or off, or to control one or more functions of the aerosol-generating device 1.

The aerosol-generating device 1 shown in Fig. 1 may be an aerosol-generating device 1 according to a first embodiment or an aerosol-generating device 1 according to a second embodiment. From outside, the aerosol-generating device 1 according to the first embodiment and the aerosol-generating device 1 according to the second embodiment may look the same. However, there are differences in some inner components between the first and second embodiments. The first embodiment will now be described with reference to Figs. 2 to 8C.

As can be seen in Fig. 2, the button 11 is provided in a through-hole 13 of the housing 5. The through-hole 13 extends through the housing 5 and connects an outer surface 15 of the housing 5 and an inner surface 17 of the housing 5. The outer surface 15 of the housing 5 may at least partially form an outer surface of the aerosol-generating device 1.

The housing 5 comprises a retaining protrusion 19 extending into the through-hole 13 of the housing 5 along a circumference of the through-hole 13. The button 11 comprises a retaining protrusion 21 extending laterally from the button 11 around a circumference of the button 11. As shown in Fig. 2, the retaining protrusion 21 of the button 11 is provided below the retaining protrusion 19 of the housing 5 with respect to the pressing direction 10 of the button 11. Thus, the retaining protrusion 19 of the housing 5 and the retaining protrusion 21 of the button 11 together provide a form-fit preventing the button 11 from falling out of the through-hole 13 against the pressing direction 10. The button 11 might also be retained in the through-hole 13 in different manners. For example, the housing 5 might have a plain wall delimiting the through-hole 13 without the retaining protrusion 19 of the housing 5, and the retaining protrusion 21 of the button 11 might laterally extend under the housing 5 to prevent the button 11 from falling out of the through-hole 13 against the pressing direction 10.

A membrane 23 is provided below the button 11 downstream of the button 11 with respect to the pressing direction 10. The membrane 23 extends in a plane that is perpendicular to the pressing direction 10. The membrane 23 is sealed to the inner surface 17 of the housing 5 fully around a circumference of the through-hole 13. Thus, the membrane 23 covers the through-hole 13 and seals the through-hole 13. In the illustrated embodiment, the membrane 23 is sealed to the inner surface 17 of the housing 5 by an adhesive layer 25 circumferentially surrounding the through-hole 13. The adhesive layer 25 may, for example, be a layer of double-sided adhesive tape or a layer of glue. The membrane 23 is waterproof. Further, the adhesive layer 25 attaching the membrane 23 to the housing 5 is waterproof and seals the membrane 23 to the inner surface 17 of the housing 5 in a waterproof manner. The membrane 23 may prevent foreign matter, in particular liquid, such as water, from entering the aerosol-generating device 1 through a gap between the button 11 and a wall of the housing 5 delimiting the through-hole 13.

As shown in Fig. 2, the button 11 lies on top of the membrane 23. The button 11 is supported by the membrane 23. The membrane 23 prevents the button 11 from falling into the aerosol-generating device 1 along the pressing direction 10. The button 11 is preferably not fixedly attached to the membrane 23.

A switch 27 is provided downstream of the button 11 and downstream of the membrane 23 with respect to the pressing direction 10. Thus, the membrane 23 lies between the button 11 and the switch 27. An actuation unit 29 is provided between the membrane 23 and the switch 27. The actuation unit 29 extends above the switch 27 towards the button 11.

When the button 11 is pressed, the button 11 moves towards an inside of the aerosol-generating device 1 along the pressing direction 10. The membrane 23 is made of an elastic material and deforms when the button 11 is pressed along the pressing direction 10. Thus, the button 11 engages the actuation unit 29 via the membrane 23. Due to being acted upon by the button 11 (via the membrane 23), the actuation unit 29 in turn acts on the switch 27 to press the switch 27. **In** the first embodiment, the actuation unit 29 is an elastic element that forms a roof above the switch 27. The actuation unit 29 is elastically deformed by pressing the button 11 down along the pressing direction 10 and presses the switch 27. However, of course, the actuation unit 29 may be embodied in alternative manners as an intermediate element between the button 11 and the switch 27.

The switch 27 is provided on a printed circuit board 31 of the aerosol-generating device 1. The printed circuit board 31 may be arranged parallel to the length axis of the device 1. The length of the printed circuit board 31 may be parallel to the length axis of the device 1. The battery may be parallel to the length axis of the device 1. The length of the battery may be parallel to the length axis of the device. The printed circuit board 31 may be arranged on top of or below the battery in a direction perpendicular to the length axis of the device 1. Any one of these arrangements may provide a more compact assembly. Alternatively, the switch 29 may be connected to an electronic circuitry of the aerosol-generating device 1. Pressing the button 11 and thereby pressing the switch 27 may, for example, switch on the aerosol-generating device 1 or may activate a heating function of the aerosol-generating device 1, or may switch off the aerosol-generating device 1, or may provide an input for controlling any function of the aerosol-generating device 1.

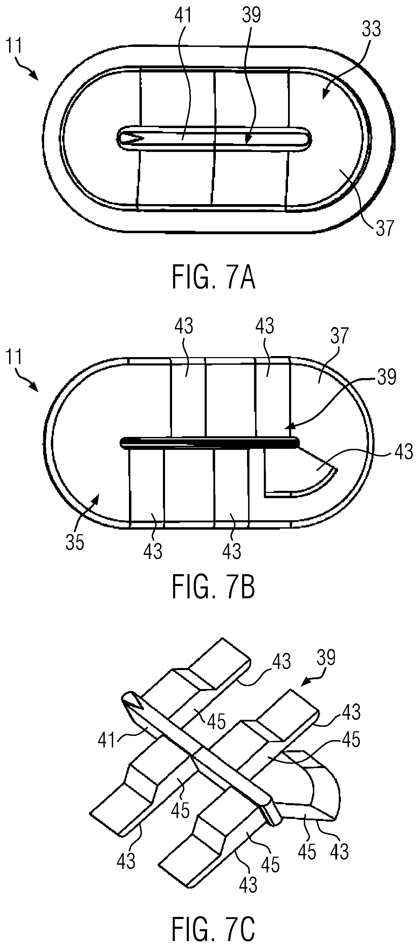

Fig. 7A shows an outer side 33 of the button 11 that faces towards an outside of the aerosol-generating device 1. Fig. 7B shows an inner side 35 of the button 11 facing towards an inside of the aerosol-generating device 1. The button 11 comprises a button main body 37 and a button light guide 39 embedded in the button main body 37. Fig. 7C shows the button light guide 39 with the button main body 37 removed. The button light guide 39 comprises a light emission surface 41 on the outer side 33 of the button 11. The light emission surface 41 is visible through an opening in the button main body 37 in a view from outside the aerosol-generating device 1. The button light guide 39 further comprises a plurality of light entry surfaces 43 at the inner side 35 of the button 11. The light entry surfaces 43 are visible through openings in the button main body 37 in a view from inside the aerosol-generating device 1. The button light guide 39 further comprises a plurality of light transfer portions 45. Each of the light transfer portions 45 connects a corresponding one of the light entry surfaces 43 with the light emission surface 41.

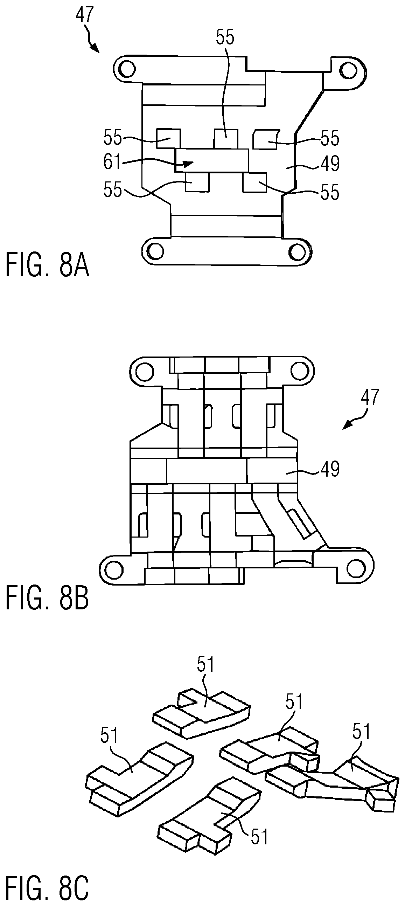

As can be seen in Fig. 2, a source light guide 47 is provided on the printed circuit board 31 downstream of (or underneath) the button 11 and the membrane 23 with respect to the pressing direction 10. Fig. 8A shows the source light guide 47 in a viewing direction along the pressing direction 10. Fig. 8B shows the source light guide 47 in a viewing direction against the pressing direction 10. The source light guide 47 comprises a source light guide main body 49. Further, the source light guide 47 comprises a plurality of light channels 51 as illustrated in Fig. 8C with the source light guide main body 49 removed.

Light sources 53 are provided laterally offset from the light emission surface 41 of the button light guide 39. The light sources 53 are also laterally offset from the light entry surfaces 43 of the button light guide 39. Further, the light sources 53 are laterally offset from the through-hole 13 of the housing 5. The light sources 53 are also laterally offset from the button 11. The laterally offset positioning of the light sources 53 may ensure that the light sources 53 do not interfere with the operation of the button 11 and the switch 27.

Each of the light channels 51 of the source light guide 47 extends to a corresponding one of the light sources 53. In the illustrated embodiment, there are five light sources 53 and five corresponding light channels 51. The light channels 51 guide the light of the corresponding light source 53 to a light output end 55 of the respective light channel 51 at the surface of the source light guide 47 facing towards the button 11.

The light output ends 55 of the light channels 51 each face a corresponding one of the light entry surfaces 43 of the button light guide 39. The light output ends 55 of the light channels 51 face the light entry surfaces 43 of the button light guide 39 along the pressing direction 10. Thus, light exiting the source light guide 47 through an output end 55 of one of the light channels 51 enters the button light guide 39 through a corresponding one of the light entry surfaces 43.

As can be seen in Fig. 7C, the light exit surface 41 of the button light guide 39 has an elongate shape, in particular the shape of a line. The light transfer portions 45 corresponding to the individual light entry surfaces 43 of the button light guide 39 connect to the portion of the button light guide 39 forming the light output surface 41 at different positions along the main extension direction of the light output surface 41. Therefore, light from different light sources 53 is emitted through the light output surface 41 of the button light guide 39 towards an outside of the aerosol-generation device 1 at different positions along the main extension direction of the output light guide 41.

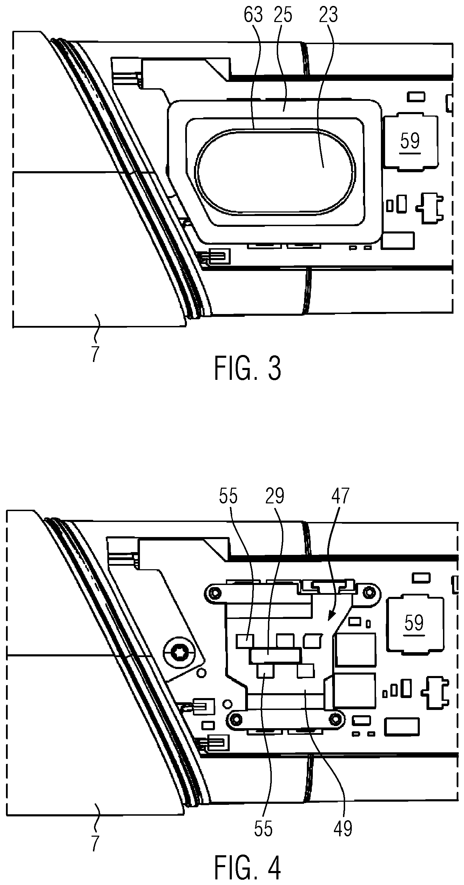

A controller 59 as schematically shown in Figs. 3 to 6 controls the light sources 53. For example, the controller 59 may individually or in groups activate or deactivate certain light sources 53 to obtain a certain spatial light intensity distribution over the light emission surface 41. In an embodiment, the controller 59 selectively activates and deactivates the individual light sources 53 according to a charging state of the battery of the aerosol-generation device 1 to indicate the charging state to a user. For example, if the battery is full, then all light sources 53 may be activated such that the entire length of the light emission surface 41 is illuminated. When the charging state of the battery decreases, a proportional number of light sources 53 may be deactivated in an order corresponding to the positions at which the light from the light sources 53 is supplied to the light emitting surface 41 of the button light guide 39. Thus, for a lower charging state of the battery, a reduced length of the light output surface 41 of the button light guide 39 may be illuminated. The illuminated length may be proportional to a charging state of the battery.

As shown, for example, in Figs. 2 and 8A, the source light guide 47 comprises an opening 61. The opening 61 is located upstream of the switch 27 with respect to the pressing direction 10. The switch 27 is provided directly below the opening 61. The actuation unit 29 comprises an elastic material and is elastically deformable. The actuation unit 29 extends through the opening 61 of the source light guide 47 to enable the button 11 to act on the actuation unit 29, when being pressed down along the pressing direction 10. When the button 11 is pressed down, the button 11 deforms the actuation unit 29 such that the actuation unit 29 presses the switch 27.

Fig. 3 shows the aerosol-generation device 1 with the second housing part 9 and the button 11 removed in a partial view with a viewing direction along the pressing direction 10. The membrane 23 provided below the button 11 is visible in Fig. 3. As can be seen in Fig. 3 and in Fig. 2, the membrane 23 may comprise a centering feature 63 for centering the button 11 in the through-hole 13 with respect to a lateral direction. In the illustrated embodiment, the centering feature 63 has the form of a wall extending from a surface of the membrane 23 facing against the pressing direction 10. In the illustrated embodiment, the centering feature 63 fully extends around a circumference of the button 11. Alternatively, the centering feature 63 may comprise two or more separate sections provided at different positions along the circumference of the button 11.

Fig. 4 shows the view of Fig. 3 with the membrane 23 removed. In Fig. 4, the source light guide 47 is visible in the view as shown in Fig. 8A.

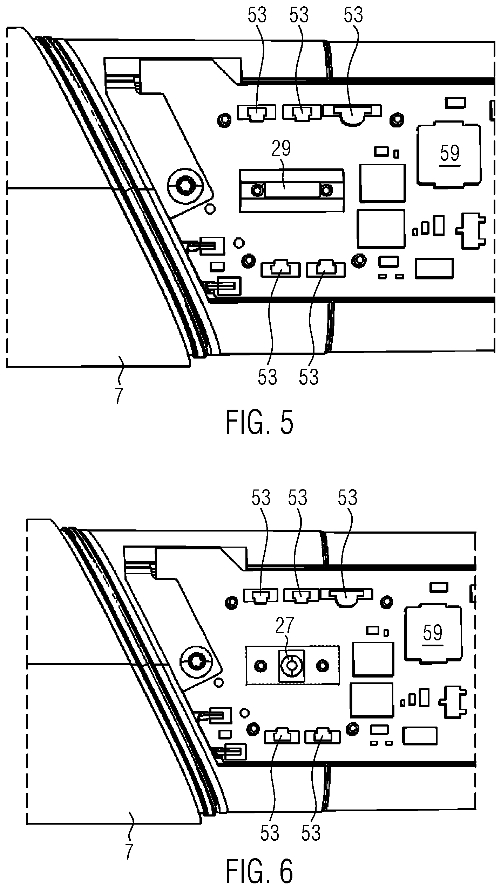

Fig. 5 shows the view of Fig. 4 with the source light guide 47 removed. In Fig. 5, the light sources 53 and the actuation unit 29 are visible. In the illustrated embodiment, there are five light sources 53. A first number of light sources 53 is provided on a first lateral side of the switch 27 and a second number of light sources 53 is provided on an opposing second lateral side of the switch 27. Providing the light sources 53 on opposing sides of the switch 27 may allow to efficiently use the available space on the printed circuit board 31.

Fig. 6 shows the view of Fig. 5 with the actuation unit 29 removed, thus revealing the switch 27.

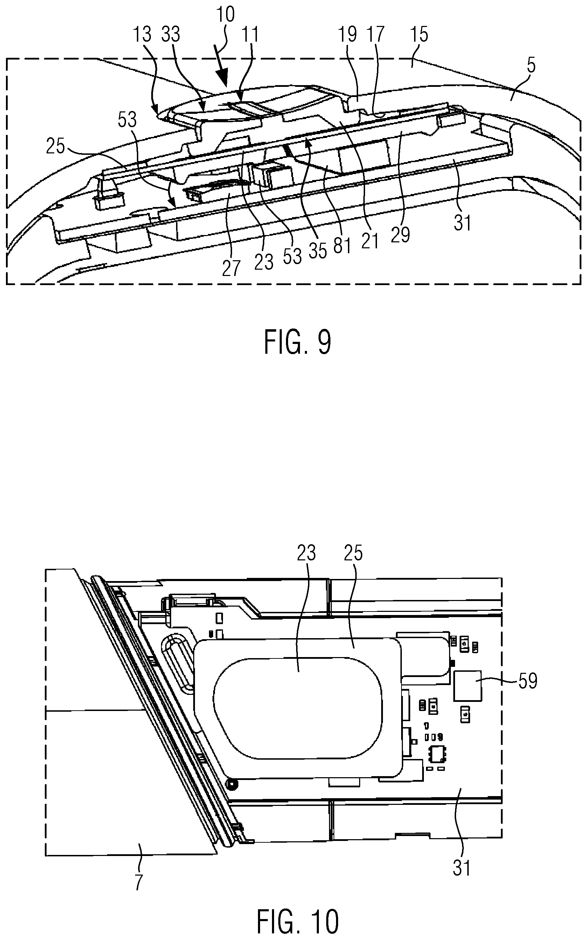

Now, the second embodiment will be described with reference to Figs. 9 - 13C.

As shown in Fig. 9, according to the second embodiment, the button 11 is provided in a through-hole 13 of the housing 5 in a similar manner as in the first embodiment.

The through-hole 13 extends through the housing 5 and connects an outer surface 15 of the housing 5 and an inner surface 17 of the housing 5. The outer surface 15 of the housing 5 may at least partially form an outer surface of the aerosol-generating device 1.

The housing 5 comprises a retaining protrusion 19 extending into the through-hole 13 of the housing 5 along a circumference of the through-hole 13. The button 11 comprises a retaining protrusion 21 extending laterally from the button 11 around a circumference of the button 11. As shown in Fig. 2, the retaining protrusion 21 of the button 11 is provided below the retaining protrusion 19 of the housing 5 with respect to the pressing direction 10 of the button 11. Thus, the retaining protrusion 19 of the housing 5 and the retaining protrusion 21 of the button 11 together provide a form-fit preventing the button 11 from falling out of the through-hole 13 against the pressing direction 10. The button 11 might be retained in the through-hole 13 in different manners. For example, the housing 5 might have a plain wall delimiting the through-hole 13 without the retaining protrusion 19 of the housing 5, and the retaining protrusion 21 of the button 11 might laterally extend under the housing 5 to prevent the button 11 from falling out of the through-hole 13 against the pressing direction 10.

As in the first embodiment, a membrane 23 is provided below the button 11 downstream of the button 11 with respect to the pressing direction 10. The membrane 23 extends in perpendicular to the pressing direction 10. The membrane 23 is sealed to the inner surface 17 of the housing 5 fully around a circumference of the through-hole 13. Thus, the membrane 23 covers the through-hole 13 and seals the through-hole 13. The membrane 23 is sealed to the inner surface 17 of the housing 5 by an adhesive layer 25 circumferentially surrounding the through-hole 13. The adhesive layer 25 may, for example, be a layer of double-sided adhesive tape or a layer of glue. The membrane 23 is waterproof. Further, the adhesive layer 25 attaching the membrane 23 to the housing 5 is waterproof and seals the membrane 23 to the inner surface 17 of the housing 5 in a waterproof manner. The membrane 23 may prevent foreign matter, in particular liquid, such as water, from entering the aerosol-generating device 1 through a gap be-tween the button 11 and a wall of the housing 5 delimiting the through-hole 13.

Fig. 10 shows the aerosol-generation device 1 with the second housing part 9 and the button 11 removed in a partial view with a viewing direction along the pressing direction 10. The membrane 23 provided below the button 11 is visible in Fig. 10. Further, the adhesive layer 25 is visible in Fig. 10.

As shown in Fig. 9, the button 11 lies on top of the membrane 23. The button 11 is supported by the membrane 23. The membrane 23 prevents the button 11 from falling into the aerosol-generating device 1 along the pressing direction 10. The button 11 is preferably not fixedly attached to the membrane 23.

A switch 27 is provided on a printed circuit board 31 provided downstream of the button 11 and downstream of the membrane 23 with respect to the pressing direction 10. Thus, the mem-brane 23 lies between the button 11 and the printed circuit board 31 with the switch 27. The printed circuit board 31 extends in perpendicular to the pressing direction 10.

An actuation unit 29 is provided between the membrane 23 and the printed circuit board 31. The actuation unit 29 according to the second embodiment has a plate shape or a platform shape. A main extension direction of the actuation unit 29 is generally perpendicular to the pressing direction 10. The actuation unit 29 may extend in parallel to the membrane 23. The actuation unit 29 may be provided directly downstream of the membrane 23 with respect to the pressing direction 10.

A damper 81 is provided on the printed circuit board 31. The damper 81 comprises an elastic material. The damper 81 may be formed as a block-shaped structure on top of the printed circuit board 31. The damper 81 may be provided downstream of the actuation unit 29 with respect to the pressing direction 10. The damper 81 may protrude from the printed circuit board 31 further against the pressing direction 10 than the switch 27.

When the button 11 is pressed, the button 11 moves towards an inside of the aerosol-generating device 1 along the pressing direction 10. The membrane 23 is made of an elastic material and deforms when the button 11 is pressed along the pressing direction 10. Thus, the button 11 engages the actuation unit 29 via the membrane 23.

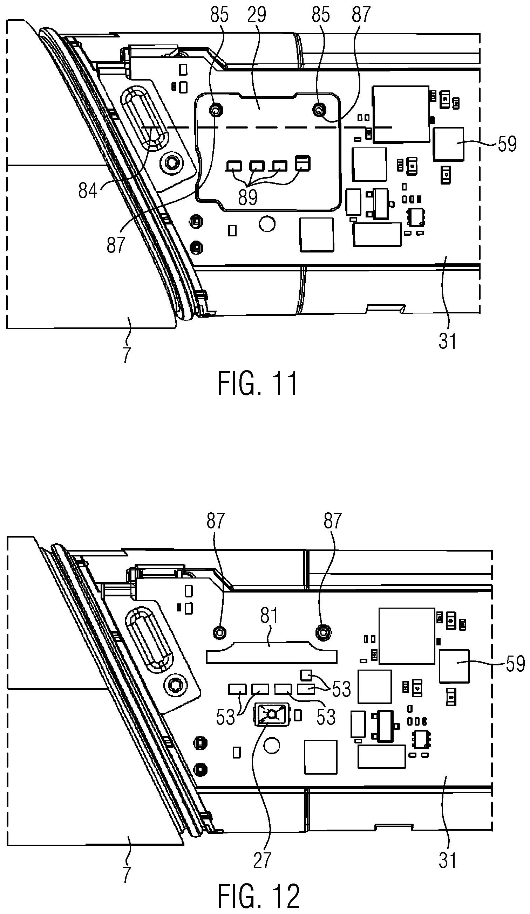

Due to the pressing force applied via the button 11, a force directed along the pressing direction 10 acts on the actuation unit 29. The damper 81 counteracts the movement of the actuation unit 29 along the pressing direction 10. This causes the actuation unit 29 to carry out a tilting motion, wherein a region of the actuation unit 29 provided above the switch 27 moves further downward along the pressing direction 10 than a region of the actuation unit 29 provided above the damper 81. The tilting motion is schematically illustrated by arrow 83 in Fig. 9 and by tilting axis 84 in Fig. 11. The tilting motion of the actuation unit 29 brings the actuation unit 29 in contact with the switch 27, thereby actuating the switch 27. Actuating the switch 27 may, for example, switch on the aerosol-generating device 1, or may activate a heating function of the aerosol-generating device 1, or may switch off the aerosol-generating device 1, or might provide an input for controlling any function of the aerosol-generating device 1.

Once the button 11 is released by the user, the actuation unit 29 carries out a reverse tilting motion, returning the actuation unit 29 to its initial position. The return motion of the actuation unit 29 may be caused, partly or fully, by an elastic force applied by the damper 81.

Fig. 11 shows the view of Fig. 10 with the membrane 23 and the adhesive layer 25 re-moved. Thus, in Fig. 11 the actuation unit 29 can be seen in a top view. The actuation unit 29 comprises guide holes 85 extending through the actuation unit 29 in parallel to the pressing direction 10. Guide pins 87 provided on the printed circuit board 31 extend into the guide holes 85 from below. Interaction between the guide holes 85 and the guide pins 87 ensures that the actuation unit 29 remains in place above the damper 81 and the switch 27. The guide pins 87 are received in the guide holes 85 with sufficient play to allow for the tilting motion of the actuation unit 27.

Fig. 12 shows the view of Fig. 10 with the actuation unit 29 removed. Thus, the switch 27, the damper 81 and the guide pins 87 provided on the printed circuit board 31 are visible in Fig. 12. The damper 81 is provided between the guide pins 87 and the switch 27.

As shown in Fig. 12, light sources 53 are provided on the printed circuit board 31 below the actuation unit 29. In the illustrated embodiment, five light sources 53 are provided on the printed circuit board 31 below the actuation unit 29. The light sources 53 may comprise LEDs.

As shown in Fig. 11, the actuation unit 29 comprises light channels 89 extending through the actuation unit 29 in parallel to the pressing direction 10. In the illustrated embodiments, the actuation unit 29 comprises four light channels 89. Three smaller light channels 89 are provided above one corresponding light source 53 each. The fourth, larger light channel 89 is provided above two corresponding light sources 53. Light from the light sources 53 passes through the light channels 89 in the actuation unit 29 towards the button 11.

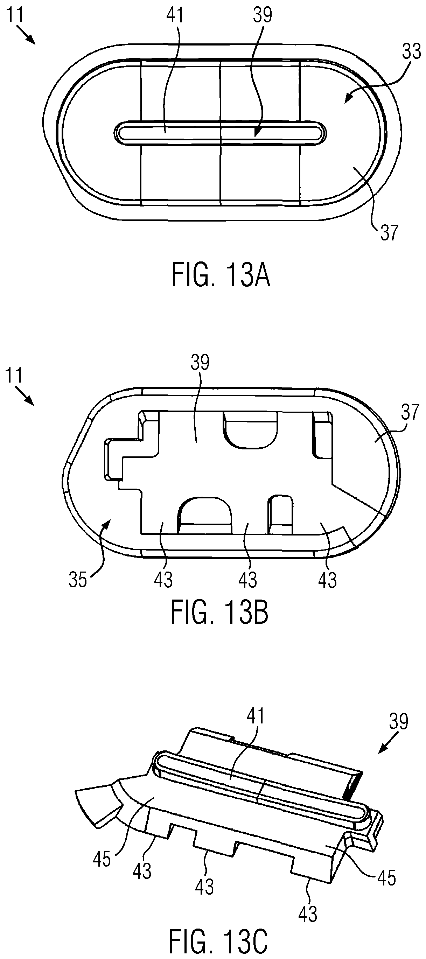

Fig. 13A shows an outer side 33 of the button 11 facing towards an outside of the aerosol-generating device 1. Fig. 13B shows an inner side 35 of the button 11 facing towards an inside of the aerosol-generating device 1. The button 11 comprises a button main body 37 and a button light guide 39 embedded in the button main body 37. Fig. 13C shows the button light guide 39 with the button main body 37 removed. The button light guide 39 comprises a light emission surface 41 on the outer side 33 of the button 11. The light emission surface 41 is visible through an opening in the button main body 37 in a view from outside the aerosol-generating device 1. The button light guide 39 further comprises a plurality of light entry surfaces 43 at the inner side 35 of the button 11. The light entry surfaces 43 are visible through openings in the button main body 37 in a view from inside the aerosol-generating device 1. The button light guide 39 further comprises a plurality of light transfer portions 45. Each of the light transfer portions 45 connects a corresponding one of the light entry surfaces 43 with the light emission surface 41.

As can be seen in Fig. 13C, the light exit surface 41 of the button light guide 39 has an elongate shape, in particular the shape of a line. The light transfer portions 45 corresponding to the individual light entry surfaces 43 of the button light guide 39 connect to the portion of the button light guide 39 forming the light output surface 41 at different positions along the main extension direction of the light output surface 41.

A controller 59 as schematically shown in Figs. 10 to 12 controls the light sources 53. For example, the controller 59 may individually or in groups activate or deactivate certain light sources 53 to obtain a certain spatial light intensity distribution over the light emission surface 41. For example, the controller 59 may selectively activate and deactivate the individual light sources 53 according to a charging state of the battery of the aerosol-generation device 1 to indicate the charging state to a user. For example, if the battery is full, then all light sources 53 may be activated such that the entire length of the light emission surface 41 is illuminated. When the charging state of the battery decreases, a proportional number of light sources 53 may be deactivated in an order corresponding to the positions at which the light from the light sources 53 is supplied to the light emitting surface 41 of the button light guide 39. Thus, for a lower charging state of the battery, a reduced length of the light output surface 41 of the button light guide 39 may be illuminated. The illuminated length may be proportional to a charging state of the battery.

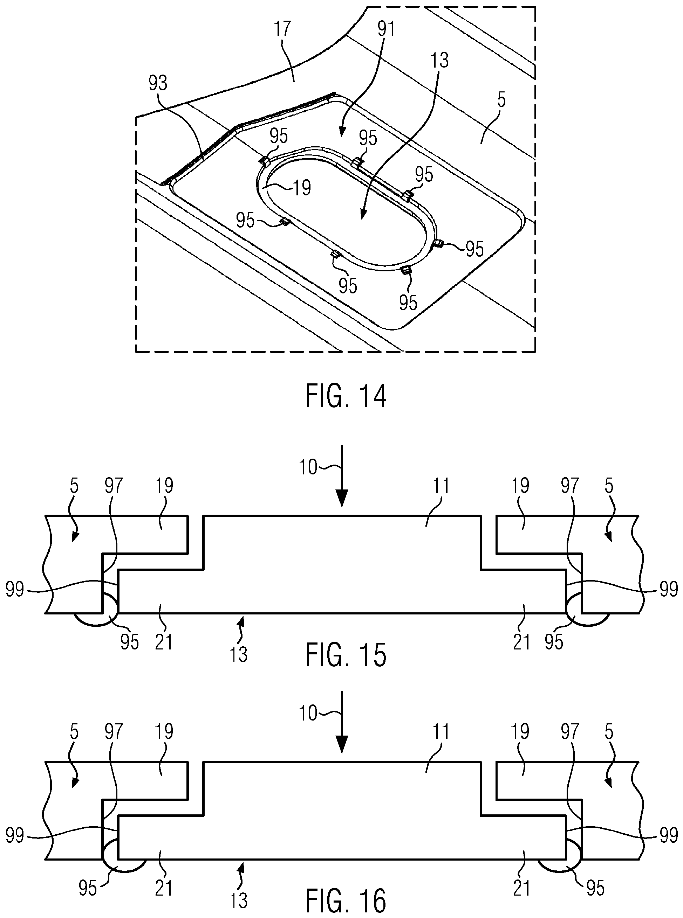

Fig. 14 shows a schematic perspective view on the inner side 17 of the housing 5 in the region of the through-hole 13. The features shown in Fig. 14 may be implemented in both the first and second embodiments. A recessed area 91 is provided around the through-hole 13. The recessed area 91 may be delimited by a step 93 formed in the housing 5. The membrane 23 is attached to the inner surface 17 of the housing 5 within the recessed area 91. Fig. 14 also shows centering parts 95 provided around the through-hole 13.

Fig. 15 shows a sectional view through the housing 5 at the position of the through-hole 13 with the button 11 received in the through-hole 13. As shown in Fig. 15, the centering parts 95 are provided at a wall portion 97 of the housing 15 delimiting the through-hole 13. The centering parts 95 extend from the wall portion 97 into the through-hole 13. The centering parts 95 engage a lateral surface 99 of the button 11. By engagement between the centering parts 95 and the lateral surface 99 of the button 11, rotation of the button 11 in the through-hole 13 is limited. Further, engagement between the centering parts 95 and the lateral surface 99 of the button 11 contributes to centering the button 11 within the through-hole 13.

As shown in Fig. 14, the centering parts 95 are provided around the circumference of the through-hole 13 at intervals. In between neighboring centering parts 95, larger gaps are formed between the wall portion 97 of the housing 5 and the lateral surface 99 of the button 11.

Fig. 16 shows an alternative arrangement of the centering parts 95. According to Fig. 16, the centering parts 95 are provided at the lateral surface 99 of the button 11 and extend outwards towards the wall portion 97 of the housing 5 delimiting the through-hole 13. The centering parts 95 limit rotation of the button 11 in the through-hole 13 by engagement with the wall portion 97 of the housing 5.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A ± 10 % of A. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

## Claims

1. Aerosol-generating device (1), comprising:
a housing (5) having an outer surface (15), an inner surface (17), and a through-hole (13) connecting the outer surface (15) and the inner surface (17);
a button (11) at least partially arranged in the through-hole (13); and
a membrane (23) fixed to the housing (5) and extending across the through-hole (13);
wherein a form-fit (19, 21) is provided between the housing (5) and the button (11);
**characterized in that**
the form-fit (19, 21) is configured to retain the button (11) in the through-hole (13) against the button (11) falling out of the through-hole (13) towards an outside of the aerosol-generating device (1).

2. Aerosol-generating device according to claim 1, wherein the membrane (23) is transparent or translucent.

3. Aerosol-generating device according to claim 1 or 2, wherein a recessed area (91) is provided at the inner surface (17) of the housing (5), and wherein the membrane (23) is fixed to the inner surface (17) of the housing (5) within the recessed area (91).

4. Aerosol-generating device according to any one of the preceding claims, wherein the membrane (23) is sealed to the housing (5) by at least one of: an adhesive, or vibration welding, or laser welding, or the membrane (23) being two-shot molded to the housing (5).

5. Aerosol-generating device according to any one of the preceding claims, wherein the membrane (23) is configured to act on the button (11) to support a return motion of the button (11) from an activated position of the button (11) into a resting position of the button (11).

6. Aerosol-generating device according to any one of the preceding claims, wherein the form-fit (19, 21) comprises one or more retaining protrusions (19) of the housing (5), wherein the one or more retaining protrusions (19) of the housing (5) extend into the through-hole (13).

7. Aerosol-generating device according to any one of the preceding claims, wherein the button (11) is detached with respect to the membrane (23).

8. Aerosol-generating device according to any one of the preceding claims, wherein the membrane (23) is formed as a flat sheet.

9. An aerosol-generating system comprising an aerosol-generating article and an aerosol-generating device (1) according to any one of the preceding claims, wherein the aerosol-generating device (1) is configured to generate aerosol from the aerosol-generating article.

10. Method for actuating a switch (27) of an aerosol-generating device (1), comprising the steps of:
moving a button (11) from a resting position towards an inside of the aerosol-generating device (1) into an activated position, wherein the button (11) is at least partially provided within a through-hole (13) of a housing (5) of the aerosol-generating device (1);
deforming a membrane (23) of the aerosol-generating device (1) by the movement of the button (11); and
actuating a switch (27) by the movement of the button (11), the switch (27) being provided on the opposite side of the membrane (23) than the button (22);
**characterized by**
retaining the button (11) in the through-hole (13) against the button (22) falling out of the through-hole (13) towards an outside of the aerosol-generating device (1) by a form-fit (19, 21) provided between the housing (5) and the button (11).

11. Method according to claim 10, wherein the membrane (23) seals the through-hole (13).

12. Method according to claim 10 or 11, wherein the button (11) is configured to move with respect to the membrane (23).

13. Use of a membrane (23) for sealing a through-hole (13) of a housing (5) of an aerosol-generating device (1), wherein a button (11) of the aerosol-generating device (1) is moveable in the through-hole (13), and wherein a form-fit (19, 21) is provided between the housing (5) and the button (11), **characterized in that** the form-fit (19, 21) retains the button (11) in the through-hole (13) against the button (11) falling out of the through-hole (13) towards an outside of the aerosol-generating device (1).

14. Use according to claim 13, wherein the button (11) is configured to move with respect to the membrane (23).

## Patentansprüche

1. Aerosolerzeugungsvorrichtung (1), aufweisend:
ein Gehäuse (5), aufweisend eine Außenfläche (15), eine Innenfläche (17) und ein Durchgangsloch (13), das die Außenfläche (15) und die Innenfläche (17) verbindet;
eine Taste (11), der wenigstens teilweise in dem Durchgangsloch (13) angeordnet ist; und
eine Membran (23), die an dem Gehäuse (5) befestigt ist und sich über das Durchgangsloch (13) erstreckt;
wobei ein Formschluss (19, 21) zwischen dem Gehäuse (5) und der Taste (11) vorgesehen ist;
**dadurch gekennzeichnet, dass**
der Formschluss (19, 21) ausgelegt ist, die Taste (11) in dem Durchgangsloch (13) gegen ein Herausfallen der Taste (11) aus dem Durchgangsloch (13) zu der Außenseite der Aerosolerzeugungsvorrichtung (1) zurückzuhalten.

2. Aerosolerzeugungsvorrichtung nach Anspruch 1, wobei die Membran (23) transparent oder durchscheinend ist.

3. Aerosolerzeugungsvorrichtung nach Anspruch 1 oder 2, wobei an der Innenfläche (17) des Gehäuses (5) ein vertiefter Bereich (91) vorgesehen ist, und wobei die Membran (23) innerhalb des vertieften Bereichs (91) an der Innenfläche (17) des Gehäuses (5) befestigt ist.

4. Aerosolerzeugungsvorrichtung nach einem beliebigen der vorhergehenden Ansprüche, wobei die Membran (23) mit dem Gehäuse (5) durch wenigstens eines abgedichtet ist von: einem Klebstoff oder einer Vibrationsschweißung oder einer Laserschweißung, oder wobei die Membran (23) mit dem Gehäuse (5) durch Zweikomponentenguss verbunden ist.

5. Aerosolerzeugungsvorrichtung nach einem beliebigen der vorhergehenden Ansprüche, wobei die Membran (23) ausgelegt ist, auf die Taste (11) einzuwirken, um eine Rückbewegung der Taste (11) von einer aktivierten Position der Taste (11) in eine Ruheposition der Taste (11) zu unterstützen.

6. Aerosolerzeugungsvorrichtung nach einem beliebigen der vorhergehenden Ansprüche, wobei der Formschluss (19, 21) einen oder mehrere Rückhaltevorsprünge (19) des Gehäuses (5) aufweist, wobei sich der eine oder die mehreren Rückhaltevorsprünge (19) des Gehäuses (5) in das Durchgangsloch (13) erstrecken.

7. Aerosolerzeugungsvorrichtung nach einem beliebigen der vorhergehenden Ansprüche, wobei die Taste (11) in Bezug auf die Membran (23) gelöst ist.

8. Aerosolerzeugungsvorrichtung nach einem beliebigen der vorhergehenden Ansprüche, wobei die Membran (23) als ein flaches Blech gebildet ist.

9. Aerosolerzeugungssystem, aufweisend einen aerosolerzeugenden Artikel und eine Aerosolerzeugungsvorrichtung (1) nach einem beliebigen der vorhergehenden Ansprüche, wobei die Aerosolerzeugungsvorrichtung (1) ausgelegt ist, Aerosol aus dem aerosolerzeugenden Artikel zu erzeugen.

10. Verfahren für ein Betätigen eins eines Schalters (27) einer Aerosolerzeugungsvorrichtung (1), umfassend die folgenden Schritte:
Bewegen einer Taste (11) aus einer Ruheposition in Richtung einer Innenseite der aerosolerzeugenden Vorrichtung (1) in eine aktivierte Position, wobei die Taste (11) wenigstens teilweise innerhalb eines Durchgangslochs (13) eines Gehäuses (5) der Aerosolerzeugungsvorrichtung (1) vorgesehen ist;
Verformen einer Membran (23) der Aerosolerzeugungsvorrichtung (1) durch die Bewegung der Taste (11); und
Betätigen eines Schalters (27) durch die Bewegung der Taste (11), wobei der Schalter (27) auf der gegenüberliegenden Seite der Membran (23) als die Taste (22) vorgesehen ist;
**gekennzeichnet durch**
Zurückhalten der Taste (11) in dem Durchgangsloch (13) gegen das Herausfallen der Taste (22) aus dem Durchgangsloch (13) in Richtung einer Außenseite der Aerosolerzeugungsvorrichtung (1) durch einen Formschluss (19, 21), der zwischen dem Gehäuse (5) und der Taste (11) vorgesehen ist.

11. Verfahren nach Anspruch 10, wobei die Membran (23) das Durchgangsloch (13) abdichtet.

12. Verfahren nach Anspruch 10 oder 11, wobei die Taste (11) ausgelegt ist, sich in Bezug auf die Membran (23) zu bewegen.

13. Verwendung einer Membran (23) für ein Abdichten eines Durchgangslochs (13) eines Gehäuses (5) einer Aerosolerzeugungsvorrichtung (1), wobei eine Taste (11) der Aerosolerzeugungsvorrichtung (1) in dem Durchgangsloch (13) bewegbar ist, und wobei ein Formschluss (19, 21) zwischen dem Gehäuse (5) und der Taste (11) vorgesehen ist, **dadurch gekennzeichnet, dass** der Formschluss (19, 21) die Taste (11) in dem Durchgangsloch (13) gegen ein Herausfallen der Taste (11) aus dem Durchgangsloch (13) in Richtung einer Außenseite der Aerosolerzeugungsvorrichtung (1) zurückhält.

14. Verwendung nach Anspruch 13, wobei die Taste (11) ausgelegt ist, sich in Bezug auf die Membran (23) zu bewegen.

## Revendications

1. Dispositif de génération d'aérosol (1) comprenant :
un logement (5) ayant une surface extérieure (15), une surface intérieure (17) et un trou traversant (13) raccordant la surface extérieure (15) et la surface intérieure (17) ;
un bouton (11) au moins partiellement agencé dans le trou traversant (13) ; et
une membrane (23) fixée au logement (5) et s'étendant en travers du trou traversant (13) ;
dans lequel un ajustement de forme (19, 21) est prévu entre le logement (5) et le bouton (11) ;
**caractérisé en ce que**
l'ajustement de forme (19, 21) est configuré pour retenir le bouton (11) dans le trou traversant (13) contre la chute du bouton (11) hors du trou traversant (13) vers l'extérieur du dispositif de génération d'aérosol (1).

2. Dispositif de génération d'aérosol selon la revendication 1, dans lequel la membrane (23) est transparente ou translucide.

3. Dispositif de génération d'aérosol selon la revendication 1 ou 2, dans lequel une zone évidée (91) est prévue au niveau de la surface intérieure (17) du logement (5), et dans lequel la membrane (23) est fixée à la surface intérieure (17) du logement (5) au sein de la zone évidée (91).

4. Dispositif de génération d'aérosol selon l'une quelconque des revendications précédentes, dans lequel la membrane (23) est scellée au logement (5) par au moins l'un parmi : un adhésif, ou un soudage par vibration, ou un soudage au laser, ou la membrane (23) étant moulée en deux fois sur le logement (5).

5. Dispositif de génération d'aérosol selon l'une quelconque des revendications précédentes, dans lequel la membrane (23) est configurée pour agir sur le bouton (11) afin de contribuer à un mouvement de retour du bouton (11) d'une position activée du bouton (11) à une position de repos du bouton (11).

6. Dispositif de génération d'aérosol selon l'une quelconque des revendications précédentes, dans lequel l'ajustement de forme (19, 21) comprend une ou plusieurs saillies de retenue (19) du logement (5), dans lequel les une ou plusieurs saillies de retenue (19) du logement (5) s'étendent jusque dans le trou traversant (13).

7. Dispositif de génération d'aérosol selon l'une quelconque des revendications précédentes, dans lequel le bouton (11) est détaché par rapport à la membrane (23).

8. Dispositif de génération d'aérosol selon l'une quelconque des revendications précédentes, dans lequel la membrane (23) est formée comme une feuille plate.

9. Système de génération d'aérosol comprenant un article de génération d'aérosol et un dispositif de génération d'aérosol (1) selon l'une quelconque des revendications précédentes, dans lequel le dispositif de génération d'aérosol (1) est configuré pour générer un aérosol à partir de l'article de génération d'aérosol.

10. Procédé d'actionnement d'un commutateur (27) d'un dispositif de génération d'aérosol (1) comprenant les étapes consistant à :
déplacer un bouton (11) d'une position de repos vers l'intérieur du dispositif de génération d'aérosol (1) jusque dans une position activée, dans lequel le bouton (11) est au moins partiellement prévu au sein d'un trou traversant (13) d'un logement (5) du dispositif de génération d'aérosol (1) ;
déformer une membrane (23) du dispositif de génération d'aérosol (1) par le déplacement du bouton (11) ; et
actionner un commutateur (27) par le déplacement du bouton (11), le commutateur (27) étant prévu sur le côté de la membrane (23) opposé au bouton (22) ;
**caractérisé par**
le maintien du bouton (11) dans le trou traversant (13) contre la chute du bouton (22) hors du trou traversant (13) vers l'extérieur du dispositif de génération d'aérosol (1) par un ajustement de forme (19, 21) prévu entre le logement (5) et le bouton (11).

11. Procédé selon la revendication 10, dans lequel la membrane (23) scelle le trou traversant (13).

12. Procédé selon la revendication 10 ou 11, dans lequel le bouton (11) est configuré pour se déplacer par rapport à la membrane (23).

13. Utilisation d'une membrane (23) pour sceller un trou traversant (13) d'un logement (5) d'un dispositif de génération d'aérosol (1), dans laquelle un bouton (11) du dispositif de génération d'aérosol (1) est mobile dans le trou traversant (13), et dans laquelle un ajustement de forme (19, 21) est prévu entre le logement (5) et le bouton (11), **caractérisée en ce que** l'ajustement de forme (19, 21) retient le bouton (11) dans le trou traversant (13) contre la chute du bouton (11) hors du trou traversant (13) vers l'extérieur du dispositif de génération d'aérosol (1).

14. Utilisation selon la revendication 13, dans laquelle le bouton (11) est configuré pour se déplacer par rapport à la membrane (23).
